# EUROPEAN PATENT APPLICATION

(11) **EP 2 075 065 A1**
(43) Date of publication of application: **01.07.2009**
(21) Application number: 08703961.6
(22) Date of filing: 22.01.2008
(51) Int. Cl.: B01J 23/89, B01D 53/94, B01J 35/04

(54) **EXHAUST GAS PURIFICATION CATALYST, AND CATALYTIC HONEY-COMB STRUCTURE FOR EXHAUST GAS PURIFICATION**

(30) Priority: 24.01.2007 JP 2007013692
(71) Applicant: Nippon Steel Materials Co., Ltd., Tokyo 101-0021 (JP)
(72) Inventor: UEMURA, Kenichi, Tokyo 100-8071 (JP); HIRANO, Kenji, Tokyo 100-8071 (JP); SUGIURA, Tsutomu, Tokyo 100-8071 (JP); SAKON, Tadashi, Tokyo 100-8071 (JP); KONYA, Shogo, Tokyo 100-8071 (JP)
(74) Representative: Vossius & Partner
(86) International application number: PCT/JP2008/051149
(87) International publication number: WO 2008/091004

(57) **Abstract**

The present invention provides an exhaust gas purification catalyst comprising a three-way catalyst keeping down the amount of use of expensive precious metals, in particular not using Pt, and not containing any expensive rare earth elements and having a catalytic activity of the same level as the past and of an exhaust gas purification honeycomb structure with catalysts, that is, an exhaust gas purification catalyst containing an oxide M(Co_{1-y}Fe_{y})O_{3-δ} loading one or both of the precious metals of Pd and Rh (where M is a combination of elements substantially selected from Ba and Sr, y is 0 to 1, and δ is a value determined by satisfying a charge neutral condition) (A) and an activated alumina loading one or both of the precious metals of Pd and Rh (B) and, further, an exhaust gas purification honeycomb structure having the exhaust gas purification catalysts wash-coated on a ceramic or metal honeycomb.

## Description

### TECHNICAL FIELD

The present invention relates to a catalyst and honeycomb structure with the catalyst for purifying the carbon monoxide (CO), nitrogen oxides (NOₓ), and unburnt hydrocarbons (HC) in combustion exhaust gas. In particular, it relates to a catalyst and honeycomb structure with the catalyst for purifying carbon monoxide (CO), nitrogen oxides (NOₓ), and unburnt hydrocarbons (HC) exhausted from an automobile engine or other internal combustion engine.

### BACKGROUND ART

The gas exhausted from an automobile engine or other internal combustion engines contain CO, NOₓ, and HC. Catalyst technology for converting these to carbon dioxide (CO₂), nitrogen (N₂), and water (H₂O) to reduce the amounts of emission of CO, NOₓ, and HC is generally known. This catalyst technology is being utilized not only for the exhaust gas from internal combustion engines, but also for other combustion exhaust gases.

For the three-way catalysts for simultaneously purifying the CO, NOₓ, and HC in automotive exhaust gas, catalysts combining Pt, Pd, Rh, and other precious metals are being widely used. These precious metals are used as fine particles that are loaded on the surfaces of activated alumina (γ-alumina, ρ-alumina, χ-alumina, η-alumina, δ-alumina, κ-alumina, θ-alumina, amorphous alumina, etc.)-based oxide particles and furthermore wash-coated on metal or ceramic honeycombs.

A three-way catalyst acts effectively near the stoichiometric air-fuel ratio. To expand the window of the air-fuel ratio at which it acts effectively, the practices have also been to include cerium oxide or another oxygen storing material to improve the catalyst performance. The method of adding a suitable quantity of ceria to a precious metal/activated alumina-based oxide catalyst is for example disclosed in Japanese Unexamined Patent Publication No. 54-159391. The ceria imparts an oxygen storing function to improve the catalyst performance, but this does not reduce the amount of precious metal.

Further, as oxides other than ceria, complex oxides are also being studied. In particular, perovskite structure complex oxides containing rare earth elements are being studied. For example, Japanese Unexamined Patent Publication No. 2005-205280 discloses a catalyst loading Pd on a perovskite type complex oxide of LaAl₁₋ₓMₓO₃ (M: elements of Groups I to V and XII to XIV) including La for the purpose of improving the activity of the three-way catalyst. Further, Japanese Unexamined Patent Publication No. 2006-36558 discloses obtaining a similarly high catalytic activity by loading a precious metal element on a perovskite type complex oxide including rare earth elements such as (La,Sr)FeO₃ and (La,Sr)MnO₃. Furthermore, the inventors studied the compositions and added elements of the compositions of (La,Sr)FeO₃ and (La,Sr)MnO₃ and worked to improve the durability and heat resistance (Japanese Unexamined Patent Publication No. 2003-175337). Furthermore, for improvement of the durability of the catalytic activity of a precious metal, La(Fe,Rh)O₃ or another complex oxide having the precious metal Rh taken into the perovskite lattice is disclosed (Japanese Unexamined Patent Publication No. 2004-41866 and Japanese Unexamined Patent Publication No. 2004-41867). In the above way, a perovskite type complex oxide can use a large number of types of elements, but to effectively improve the catalyst performance of a three-way catalyst, La or another rare earth element becomes necessary.

The fact that combining an AMₓO_{y} (A: alkali metal or alkali earth metal, M: Fe, Co, or Ni) complex oxide not containing a rare earth element, in particular a spinel type AMₓO_{y} complex oxide, with a precious metal is effective for removing particulate matter and nitrogen oxides in exhaust gas of diesel engines etc. is disclosed in Japanese Unexamined Patent Publication No. 2005-66559, but performance as a three-way catalyst able to simultaneously purify CO, HC, and NOₓ like with exhaust gas purification of a gasoline engine is not suggested.

### DISCLOSURE OF THE INVENTION

Conventional three-way catalysts use precious metals mainly comprising Pt (other than Pt, Rh and Pd) to efficiently purify the CO, HC, and NOₓ in exhaust gas. If using a large amount of precious metals in this way, the catalyst performance is improved, but the cost simultaneously rises. That is, the ratio of the exhaust gas purification converter is larger in the cost structure of an engine system of an automobile etc.. Therefore, as explained above, combination of a perovskite type complex oxide and precious metals to improve the performance of a three-way catalyst has been studied. However, in the perovskite type complex oxides studied up to now, expensive rare earth elements were essential. The failure of exhaust gas purification converters to be reduced in cost is a problem. Further, while a perovskite type complex oxide containing a rare earth element is improved in catalyst performance, this does not necessarily enable a reduction in the amount of use of precious metals to an extent leading to a reduction of the cost of exhaust gas purification converters.

Further, as described in the above-mentioned Japanese Unexamined Patent Publication No. 2005-66559, complex oxides not containing any rare earth elements are being developed as exhaust gas purification catalysts, but this catalysts are for removing particulate matter and nitrogen oxides in exhaust gas of a diesel engine etc. and cannot give sufficient catalytic activity as a three-way catalyst simultaneously purifying CO, HC, and NOₓ in exhaust gas even if combined with a precious metal. With said complex oxide, it is believed that all of the oxidation of the particulate matter, the adsorption and storage of NOₓ, and the reduction and breakdown of the adsorbed NOₓ all occur on the surfaces of a single oxide. However, in detailed studies of the inventors, they learned that having a single catalyst surface handle both an oxidation reaction and a reduction reaction is extremely difficult and that if improving the catalytic activity of one, the catalytic activity of the other is not sufficiently improved. Further, they learned that if using said AMₓO_{y} as is as a three-way catalyst, it is not possible to simultaneously purify CO, HC, and NOₓ.

The present invention was made in consideration of the above problem points and has as its object the provision of an exhaust gas purification catalyst comprising a three-way catalyst keeping down the amount of use of expensive precious metals, in particular not using Pt, and not containing any expensive rare earth elements and having a catalytic activity of the same level as the past and of an exhaust gas purification honeycomb catalyst structure.

The inventors discovered that by combining a complex oxide loading a precious metal not including Pt and an activated alumina loading a precious metal not including Pt, a higher catalytic activity than the catalytic activities of the components themselves is expressed and thereby completed the present invention.

That is, the present invention has as its gist the following:
(1) An exhaust gas purification catalyst containing an oxide M(Co_{1-y}Fe_{y})O_{3-δ} loading one or both of the precious metals of Pd and Rh (where M is a combination of elements substantially selected from Ba and Sr, y is 0 to 1, and δ is a value determined by satisfying a charge neutral condition) (A) and an activated alumina loading one or both of the precious metals of Pd and Rh (B).
(2) An exhaust gas purification catalyst as set forth in (1), **characterized in that** the precious metal loaded on said oxide (A) is Pd and the precious metal loaded on said activated alumina (B) is Rh.
(3) An exhaust gas purification catalyst as set forth in (1) or (2), characterized in the oxide M(Co_{1-y}Fe_{y})O_{3-δ}(A) and activated alumina (B) loading said precious metals are in a mass ratio of A/B of 0.1 to 10.
(4) An exhaust gas purification catalyst as set forth in (1), **characterized in that** the value of said y is 0.2 to 1.
(5) An exhaust gas purification honeycomb catalyst structure characterized by having an exhaust gas purification catalyst as set forth in any one of (1) to (4) wash-coated on a ceramic or metal honeycomb.
(6) An exhaust gas purification honeycomb structure with a catalyst as set forth in (5) **characterized in that** an A/B mass ratio R1 of an exhaust gas purification catalyst of a gas inlet side of said honeycomb and an A/B mass ratio R2 of an exhaust gas purification catalyst of a gas outlet side are in a ratio of R1/R2 of over 1 to 100.
(7) An exhaust gas purification honeycomb structure with a catalyst as set forth in (5) **characterized in that** a coated amount of said exhaust gas purification catalyst with said A/B mass ratio of R1 is reduced with a gradient from a gas inlet side to gas outlet side of the honeycomb, a coated amount of said exhaust gas purification catalyst with said A/B mass ratio of R2 is reduced from a gas outlet side to a gas inlet side of the honeycomb, and a ratio of R1/R2 is over 1 to 100.
(8) An exhaust gas purification honeycomb structure with a catalyst comprising an oxide M(Co_{1-y}Fe_{y})O_{3-δ} (where M is a combination of elements substantially selected from Ba and Sr, y is 0 to 1, and δ is a value determined so as to satisfy a charge neutral condition) (A) loading one or both of the precious metals of Pd and Rh wash-coated at a gas inlet side of a ceramic or metal honeycomb and an activated alumina (B) loading one or both of the precious metals of Rd and Rh wash-coated at a gas outlet side of said honeycomb.
(9) An exhaust gas purification honeycomb structure with a catalyst as set forth in (8) **characterized in that** the precious metal loaded on said oxide (A) is Pd and the precious metal loaded on said activated alumina (B) is Rh.
(10) An exhaust gas purification honeycomb structure with a catalyst as set forth in (8) **characterized in that** the value of said y is 0.2 to 1.

### BRIEF DESCRIPTION OF THE DRAWINGS

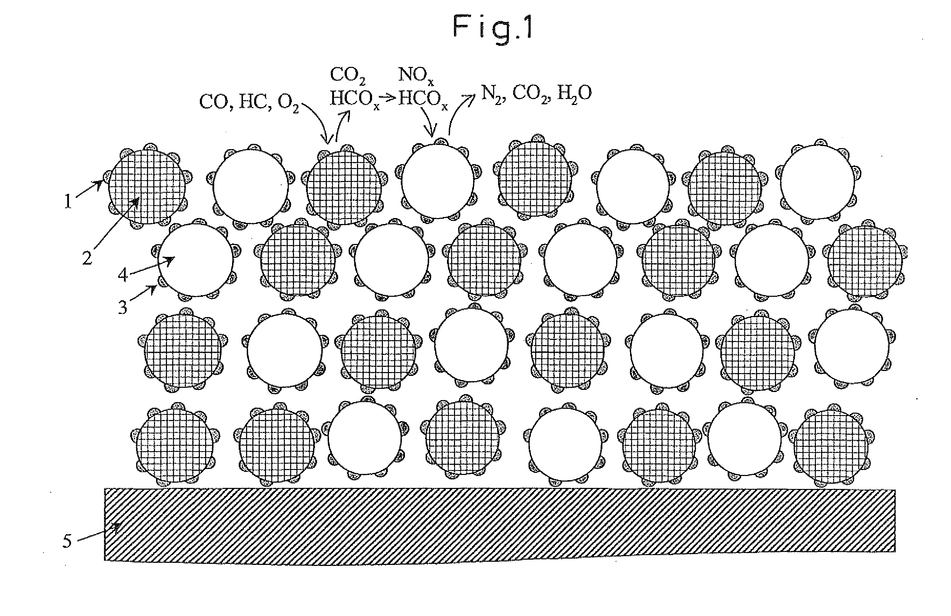

FIG. 1 is a conceptual view of an exhaust gas purification catalyst of the present invention applied to a honeycomb base member and a conceptual view explaining an exhaust gas purification reaction.

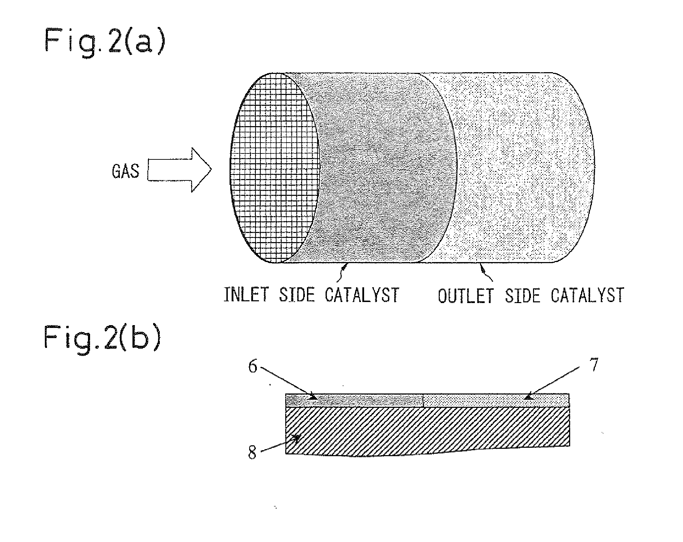

FIG. 2(a) is a perspective view showing the concept of an exhaust gas purification honeycomb structure comprising two types of the exhaust gas purification catalyst of the present invention with different A/B mass ratios wash-coated on a single honeycomb at a gas inlet side and outlet side.
FIG. 2(b) is a partial cross-sectional view of the inside of a honeycomb showing the concept of an exhaust gas purification honeycomb structure comprising two types of the exhaust gas purification catalyst of the present invention with different A/B mass ratios wash-coated on a single honeycomb at a gas inlet side and outlet side.

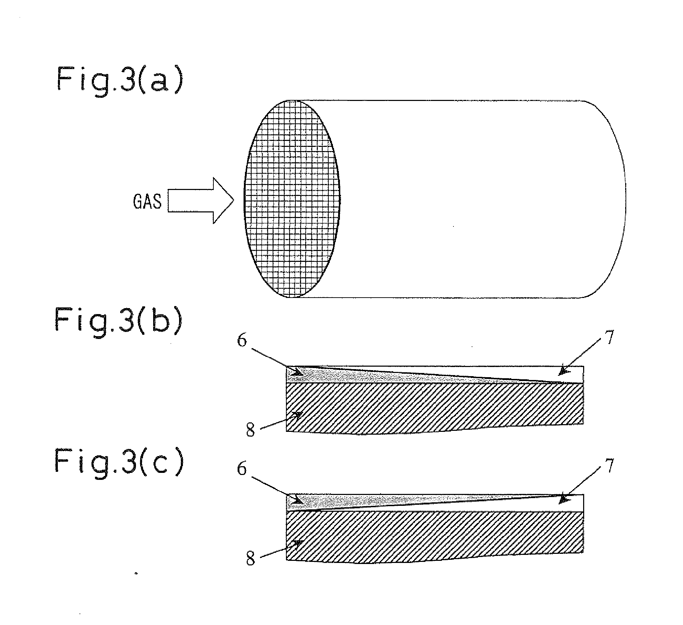

FIG. 3(a) is a perspective view showing the concept of an exhaust gas purification honeycomb structure comprising two types of the exhaust gas purification catalyst of the present invention with different A/B mass ratios wash-coated with graduated coated amounts.
FIG. 3(b) is a partial cross-sectional view of the inside of a honeycomb showing the concept of an exhaust gas purification honeycomb structure comprising two types of the exhaust gas purification catalyst of the present invention with different A/B mass ratios wash-coated with graduated coated amounts.
FIG. 3(c) is a partial cross-sectional view of the inside of a honeycomb of another example showing the concept of an exhaust gas purification honeycomb structure comprising two types of the exhaust gas purification catalyst of the present invention with different A/B mass ratios wash-coated with graduated coated amounts.

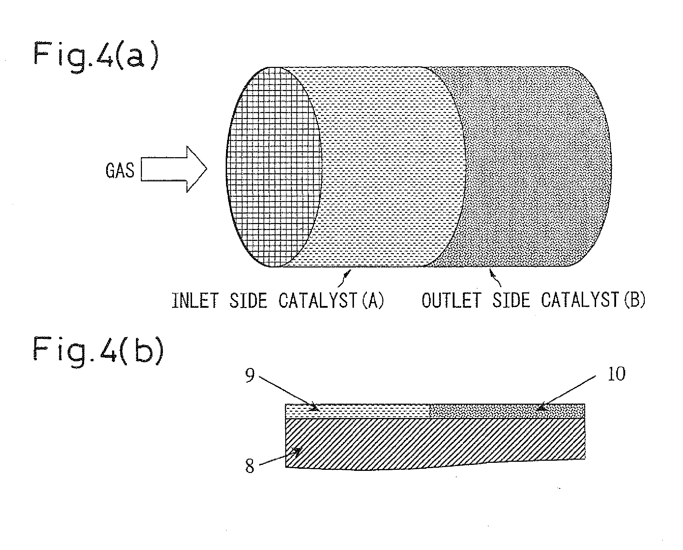

FIG. 4(a) is a perspective view showing the concept of an exhaust gas purification honeycomb structure comprising an M(Co_{1-y}Fe_{y})O_{3-δ} complex oxide loading a precious metal (A) wash-coated at a gas inlet side of the honeycomb and an activated alumina loading a precious metal (B) wash-coated at a gas outlet side of the honeycomb of the present invention.
FIG. 4(b) is a partial cross-sectional view of the inside of a honeycomb showing the concept of an exhaust gas purification honeycomb structure comprising an M(Co_{1-y}Fe_{y})O_{3-δ} complex oxide loading a precious metal (A) wash-coated at a gas inlet side of the honeycomb and an activated alumina loading a precious metal (B) wash-coated at a gas outlet side of the honeycomb of the present invention.

### BEST MODE FOR CARRYING OUT THE INVENTION

The exhaust gas purification catalyst of the present invention, as shown by the conceptual view of FIG. 1, includes an M(Co_{1-y}Fe_{y})O_{3-δ} complex oxide loading one or both of the precious metals of Pd and Rh (A) and an activated alumina loading one or both of the precious metals of Pd and Rh (B). That is, in FIG. 1, a honeycomb base member 5 is formed with a catalyst (A) formed by an M(Co_{1-y}Fe_{y})O_{3-δ} complex oxide 2 loading a precious metal 1 and a catalyst (B) formed by an activated alumina 4 loading a precious metal 3. With only the complex oxide loading a precious metal (A), the CO and HC oxidation reactions sufficiently proceed, but the NOₓ reduction reaction is slight. On the other hand, with only the activated alumina loading a precious metal not using Pt (B), all reactions of the CO oxidation-reaction, HC oxidation reaction, and NOₓ reduction reaction proceed, but if making the space velocity (SV) higher, sufficient purification no longer becomes possible and the catalytic activity is insufficient. However, with the catalyst of the present invention including both (A) and (B), the catalyst performance becomes more than the performance when simply combining the catalyst performances of the two and a high purification performance of the level of the performance of a conventional three-way catalyst is exhibited.

This synergistic high catalyst performance is believed to be due to the fact that on the surface of the complex oxide loading a precious metal (A), an oxidation reaction of CO to CO₂ and a partial oxidation reaction of HC are mainly promoted, while on the surface of the activated alumina loading a precious metal (B), mainly said partially oxidized HC (HCOₓ) reduces the NOₓ. That is, even just the activated alumina loading a precious metal (B) acts as a three-way catalyst, but if an M(Co_{1-y}Fe_{y})O_{3-δ} complex oxide (A) is present, (i) a large amount of partially oxidized HC effective for reduction of NOₓ is produced and (ii) the oxidation reactions of CO and HC occur on the surface of the M(Co_{1-y}Fe_{y})O_{3-δ} complex oxide (A), so on the surface of the activated alumina (B), the load of the oxidation reactions is reduced and greater utilization for the reduction reaction of NOₓ becomes possible whereby CO, HC, and NOₓ can be efficiently purified.

In the M(Co_{1-y}Fe_{y})O_{3-δ} of the present invention, M is a combination selected from Ba and Sr, and y is 0 to 1. δ is a value determined together with the value of y to satisfy the charge neutral condition. Further, y, in terms of catalytic activity, is particularly preferably a range of 0.2 to 1, more preferably a range of 0.9 to 1. Furthermore, the structure of the M(Co_{1-y}Fe_{y})O_{3-δ} complex oxide is not particularly limited, but at least part preferably has a perovskite structure. The particle size of the M(Co_{1-y}Fe_{y})O_{3-δ} complex oxide is preferably, in terms of average particle size, a range of 0.5 to 5.0 µm to effectively load the precious metal. The specific surface area of the particles of the M(Co_{1-y}Fe_{y})O_{3-δ} complex oxide is preferably in the range of 1 to 20 m²/g.

The previous metal loaded on the M(Co_{1-y}Fe_{y})O_{3-δ} complex oxide is one or both of the precious metals of Pd and Rh. More preferably, it is Pd. The particle size of the loaded precious metal is preferably, by average particle size, in the range of 1 to 3 nm. The amount of the precious metal loaded is not particularly limited, but is preferably 0.1 to 2.0 parts by mass with respect to 100 parts by mass of said complex oxide.

The activated alumina of the present invention is not particularly limited, but preferably has an average particle size of 0.5 to 3.0 µm. Further, the specific surface area of the activated alumina is preferably in the range of 60 to 100 m²/g.

The precious metal loaded on the activated alumina is one or both of the precious metals of Pd and Rh. More preferably, it is Rh. The particle size of the loaded precious metal is preferably, by average particle size, a range of 1 to 3 nm. The amount of said precious metal loaded is not particularly limited, but is preferably 0.1 to 1.5 parts by mass with respect to 100 parts by mass of said activated alumina.

In particular, the combination including an M(Co_{1-y}Fe_{y})O_{3-δ} complex oxide loading Pd (A) and an activated alumina loading Rh (B) results in a higher selectivity of the catalytic activities, so results in a higher catalytic activity.

The M(Co_{1-y}Fe_{y})O_{3-δ} complex oxide loading a precious metal (A) and activated alumina loading a precious metal (B) of the present invention are preferably in a mass ratio of A/B of 0.1 to 10. If less than 0.1, the amount of the M(Co_{1-y}Fe_{y})O_{3-δ} complex oxide (A) loading a precious metal becomes small, so a high catalytic activity cannot be obtained in some cases. On the other hand, if over 10, the activated alumina loading a precious metal (B) becomes small, so the NOₓ purification drops in some cases.

In the case of the present invention, even when not including cerium oxide or another oxygen storing material, there is a purification performance. This suggests there is a difference from a conventional catalyst material. Of course, use while including an oxygen storing material is also possible.

The M(Co_{1-y}Fe_{y})O_{3-δ} complex oxide of the present invention may be produced by a solid-state reaction method, a co-precipitation method or sol-gel method or other liquid phase method, a chemical vapor deposition method, a laser ablation method, or other such method. For example, the methods of production by the solid-state reaction method and co-precipitation method will be explained below.

In production by the solid-state reaction method, as the starting materials, oxides, hydroxides, carbonates, nitrates, organic acid salts, sulfates, etc. of M and oxides, hydroxides, nitrates, sulfates, etc. of Co and Fe may be used. The starting material powder of M and the starting materials of Co and Fe are weighed to give the desired composition, mixed, then calcined in a range of 600 to 1200°C. The starting materials are mixed by either the wet or dry method using mortar mixing, a ball mill, planetary ball mill, or any other existing method. The M(Co_{1-y}Fe_{y})O_{3-δ} complex oxide obtained by calcining is pulverized and in some cases classified for use.

In production by the co-precipitation method, as the starting materials, nitrates, sulfates, organic acid salts, etc. of M and nitrates, sulfates, hydroxides, chlorides, chelates, organic acid salts, etc. of Co and Fe may be used. The starting material of M and the starting materials of Co and Fe are weighed to give the desired composition and dissolved in water. A pH adjuster is added to make the pH of the solution neutral to basic and cause the ions of the dissolved M, Co, and Fe to co-precipitate. The co-precipitate is separated by filtration or centrifugation, washed, dried, then calcined in a range of 600 to 1200°C. The M(Co_{1-y}Fe_{y})O_{3-δ} complex oxide obtained by calcining is used after pulverization and classification in accordance with need.

The method of loading the precious metal on the M(Co_{1-y}Fe_{y})O_{3-δ} complex oxide is not particularly limited, but for example the following method may be used. A water soluble precious metal salt, for example, a nitrate, chloride, acetate, sulfate, etc., is dissolved in water. The M(Co_{1-y}Fe_{y})O_{3-δ} complex oxide powder is stirred into said solution and dispersed by ultrasonic dispersion etc. to obtain a suspension. The water content of the suspension is removed and the suspension dried, then the suspension is heat treated in the range of 400 to 900°C to prepare an M(Co_{1-y}Fe_{y})O_{3-δ} complex oxide (A) loading a precious metal.

The method of loading the precious metal on activated alumina is also not particularly limited, but for example this may be prepared by a method similar to the case of said M(Co_{1-y}Fe_{y})O_{3-δ} complex oxide.

The M(Co_{1-y}Fe_{y})O_{3-δ} complex oxide loading a precious metal (A) and the activated alumina loading a precious metal (B) may be mixed to obtain the exhaust gas purification catalyst of the present invention. Said mixing may be by the wet system or dry system and may be performed by mortar mixing, a ball mill, a planetary ball mill, or another existing method.

The exhaust gas purification catalyst of the present invention may be wash-coated on a ceramic or metal honeycomb to obtain an exhaust gas purification honeycomb structure with the catalyst. The ceramic honeycomb able to be used in the present invention is not particularly limited, but for example a cordierite honeycomb, silicon carbide honeycomb, etc. may be mentioned. Further, the metal honeycomb able to be used in the present invention is also not particularly limited, but for example a stainless steel honeycomb etc. may be mentioned.

When wash-coating the exhaust gas purification catalyst of the present invention on a honeycomb, first a slurry comprising the catalyst and a binder etc. dispersed in it is prepared and the honeycomb is dipped in it. As the binder, for example, aluminum nitrate, colloidal alumina, organic binder, etc. may be mentioned. Next, the excessive slurry on the honeycomb surface is blown off or removed by another method, then the honeycomb is dried, then heat-treated at a temperature of 500 to 900°C in the atmosphere for several hours. Note that said slurry may be coated on only the inside walls of the honeycomb by specially designing the fixture for mounting the honeycomb so as to suck up said slurry.

Two types of the exhaust gas purification catalyst of the present invention with different A/B mass ratios may also be wash-coated at the gas inlet side and outlet side of a single honeycomb (FIG. 2(a) and FIG. 2(b)). That is, in FIG. 2(a) and FIG. 2(b), the honeycomb base member 8 is formed with an inlet side catalyst (with a greater content of M(Co_{1-y}Fe_{y})O_{3-δ} complex oxide (A) loading a precious metal compared with the outlet side catalyst) 6 and an outlet side catalyst (with a greater content of an activated alumina loading a precious metal (B) compared with the inlet side catalyst) 7. With the catalyst of the present invention, as explained above, the HC partially oxidized by the M(Co_{1-y}Fe_{y})O_{3-δ} complex oxide loading a precious metal (A) enables the NOₓ to be effectively reduced at the activated alumina loading a precious metal (B), so it is more preferable to increase the ratio of the M(Co_{1-y}Fe_{y})O_{3-δ} complex oxide loading a precious metal (A) at the inlet side compared with the outlet side. Therefore, the A/B mass ratio R1 of the inlet side exhaust gas purification catalyst and the A/B mass ratio R2 of the outlet side exhaust gas purification catalyst preferably are in a ratio of R1/R2 of over 1 to 100 in that the purification performance is improved more. If this ratio is 1 or less, no further improvement in the purification performance can be seen. On the other hand, even if over 100, the activated alumina loading a precious metal (B) effective for NOₓ reduction becomes smaller, so no further improvement in the purification performance can be seen.

The ranges of the wash-coating at the inlet side catalyst and outlet side catalyst shown in FIG. 2(a) and FIG. 2(b) are not particularly limited, but wash-coating these in the range of 20 to 80% of the length of the honeycomb is preferable. A honeycomb catalyst structure wash-coated with two types of catalysts with different A/B mass ratios as shown in FIG. 2(a) and FIG. 2(b) may be prepared by any method. For example, it may be prepared by the following method. Two types of slurries in which two types of exhaust gas purification catalysts with different A/B mass ratios are dispersed, respectively, are prepared. The honeycomb is dipped into a first slurry for wash-coating the inlet side down to a predetermined length from the gas inlet side, then is lifted up and the excess slurry is removed. The coated honeycomb is dried or heat treated, then is similarly coated with a second slurry from the opposite outlet side and dried and heat treated.

In the honeycomb structure wash-coated with the exhaust gas purification catalysts of the present invention, as shown in FIG. 3(a), FIG. 3(b), and FIG. 3(c), it is also possible to reduce the coated amounts of the two types of catalysts with different A/B mass ratios with gradients. That is, the catalyst with an A/B mass ratio of R1 is reduced in coated amount at a gradient from the gas inlet side to the gas outlet side of the honeycomb, while the catalyst with an A/B mass ratio of R2 is reduced in coated amount at a gradient from the gas outlet side to the gas inlet side of the honeycomb. Here, the ratio of R1/R2 is preferably over 1 to 100. As shown in FIG. 3(a), FIG. 3(b), and FIG. 3(c), the coated amount from the gas inlet side or outlet side of the honeycomb may be given a gradient by any method. For example, the honeycomb is dipped in one catalyst slurry, then the excessive slurry is removed. At this time, a slurry with high viscosity may be used and the slow creeping motion of the slurry utilized to give a gradient to the coated amount. After this treatment and drying or heat treatment, the other catalyst is similarly given a gradient of a coated amount in an opposite direction of the honeycomb. After this, the honeycomb is dried and heat treated to obtain a honeycomb structure wash-coated with exhaust gas purification catalysts as shown in FIG. 3(a), FIG. 3(b), and FIG. 3(c).

Furthermore, as shown in FIG. 4(a) and FIG. 4(b), the honeycomb base member 8 can be wash-coated with the M(Co_{1-y}Fe_{y})O_{3-δ} complex oxide loading a precious metal (A) 9 at the gas inlet side of the honeycomb and wash-coated with the activated alumina loading a precious metal (B) 10 at the gas outlet side of the honeycomb to obtain an exhaust gas purification honeycomb structure with the catalyst. The method of production of said honeycomb structure with the catalyst is a method similar to the honeycomb structure with the catalyst of FIG. 2(a) and FIG. 2(b). Further, the ranges of the wash-coating of the inlet side catalyst (A) and outlet side catalyst (B) shown in FIG. 4(a) and FIG. 4(b) are not particularly limited, but these are preferably wash-coated in ranges of 30 to 70% of the length of the honeycomb.

### EXAMPLES

Below, examples of the present invention will be explained, but the present invention is not limited to these examples.

### Example 1

An M(Co_{1-y}Fe_{y})O_{3-δ} complex oxide was produced by the following method.

As the raw materials of the Sr and Ba, carbonates were used, while as the raw materials of the Co and Fe, oxides were used. Said raw materials were weighed by predetermined molar ratios, isopropyl alcohol (dispersion medium) was added, and a ball mill was used for pulverization while wet mixing so as to obtain a slurry. The solid content was separated from said slurry by a suction filter and was dried at about 120°C for 1 hour. Next, the obtained dried solid-matter was crushed, then fired in an electric furnace in the atmosphere at 950°C for 5 hours to obtain a porous mass fired body. The fired body was crushed, then was dry pulverized by an automatic mortar to obtain an M(Co_{1-y}Fe_{y})O_{3-δ} complex oxide of the composition shown in Table 1. The pulverized oxides had an average particle size of 1.2 µm and a specific surface area of 2.2 m²/g. For the composition, the amounts charged at the time of production are used, but separate chemical analysis from this was used to confirm that the amount of the metal elements in the charged compounds match with those in the product.

Next, the above M(Co_{1-y}Fe_{y})O_{3-δ} complex oxide was made to load Pd and Rh in the following way. Predetermined amounts of nitrides of Pd and Rh were weighed then dissolved in pure water to obtain an aqueous solution of about 100 mL. This aqueous solution and 100 g of a powder of said oxide were placed in a rotary evaporator and, first, rotated for agitation under ordinary temperature and reduced pressure while treated to remove bubbles. The solution was returned to ordinary pressure, heated to about 60 to 70°C, then reduced in pressure to dehydrate and dry it. The result was cooled to ordinary temperature, then returned to ordinary pressure. The solids were taken out and dried at about 180°C for 2 hours. The obtained product was heat treated in the atmosphere at 650°C for 5 hours, then crushed to obtain granules. By the above operation, one of the catalysts of the present invention, an M(Co_{1-y}Fe_{y})O_{3-δ} oxide loading one or both of the precious metals of Pd and Rh in an amount of 0.6 part by mass (A) was obtained.

Next, the activated alumina was made to load Pd and Rh by the following method. Commercially available activated alumina was weighed out in a predetermined amount and dispersed in pure water to obtain a dispersion of a volume of about 100 mL. Nitrates of Pd and Rh or finely dispersed Pd and Rh were mixed into this solution to obtain activated alumina loading one or both of the precious metals of Pd and Rh in an amount of 0.6 part by mass (B). The activated alumina used here had an average particle size of 1.4 µm and a specific surface area of 90.6 m²/g_{.}

The specific surface area was measured using a Belsorb made by Bel Japan by the BET method based on the adsorption of nitrogen gas. Further, the particle size was measured using a laser diffraction type particle size distribution measuring device made by Shimadzu Corporation.

Next, the above precious metal loading oxide powder (A) and precious metal loading activated alumina powder (B) were used to prepare slurries which were then loaded on particle-like ceramic carriers and honeycomb-like metal carriers.

A mixture of the precious metal loading oxide powder (A) and the precious metal loading γ-alumina powder (B) in each of the A/B mass ratios shown in Table 1 in an amount of 19 parts by mass, pure water in an amount of 7 parts by mass, and methyl cellulose solution commercially available as a binder (solid content 2.5 mass%) in an amount of 10 parts by mass were stirred while being added and furthermore a defoaming agent was added and the result was mixed well to obtain a slurry.

**Table 1**

| No. | Precious metal loading oxide powder (A) | | | | | Loaded precious metal of precious metal loading activated alumina powder (B) | A/B mass ratio | Remarks |
|---|---|---|---|---|---|---|---|---|
| | Composition of M(Co_{1-y}Fe_{y}) O_{3-δ} complex oxide (molar ratio ) | | | | Loaded precious metal | | | |
| | Ba | Sr | Co | Fe | | | | |
| 1-1 | 1 | 0 | 1 | 0 | Pd | Rh | 1 | Inv. ex. |
| 1-2 | 1 | 0 | 0 | 1 | Pd | Rh | 1 | Inv. ex. |
| 1-3 | 0 | 1 | 1 | 0 | Pd | Rh | 1 | Inv. ex. |
| 1-4 | 0 | 1 | 0 | 1 | Pd | Rh | 1 | Inv. ex. |
| 1-5 | 0 | 1 | 0.8 | 0.2 | Pd | Rh | 1 | Inv. ex. |
| 1-6 | 0 | 1 | 0.2 | 0.8 | Pd | Rh | 1 | Inv. ex. |
| 1-7 | 0.5 | 0.5 | 1 | 0 | Pd | Rh | 1 | Inv. ex. |
| 1-8 | 0.5 | 0.5 | 0 | 1 | Pd | Rh | 1 | Inv. ex. |
| 1-9 | 0.2 | 0.8 | 1 | 0 | Pd | Rh | 1 | Inv. ex. |
| 1-10 | 0.2 | 0.8 | 0 | 1 | Pd | Rh | 1 | Inv. ex. |
| 1-11 | 0.5 | 0.5 | 0.7 | 0.3 | Pd | Rh | 1 | Inv. ex. |
| 1-12 | 0.5 | 0.5 | 0.3 | 0.7 | Pd | Rh | 1 | Inv. ex. |
| 1-13 | 0 | 1 | 1 | 0 | Rh | Rh | 1 | Inv. ex. |
| 1-14 | 0 | 1 | 0 | 1 | Rh | Rh | 1 | Inv. ex. |
| 1-15 | 0 | 1 | 1 | 0 | Rh | Pd | 1 | Inv. ex. |
| 1-16 | 0 | 1 | 0 | 1 | Rh | Pd | 1 | Inv. ex. |
| 1-17 | 0 | 1 | 1 | 0 | Pd | Pd | 1 | Inv. ex. |
| 1-18 | 0 | 1 | 0 | 1 | Pd | Pd | 1 | Inv. ex. |
| 1-19 | 0 | 1 | 1 | 0 | Pd, Rh | Rh | 1 | Inv. ex. |
| 1-20 | 0 | 1 | 0 | 1 | Pd, Rh | Rh | 1 | Inv. ex. |
| 1-21 | 0 | 1 | 1 | 0 | Rh | Pd, Rh | 1 | Inv. ex. |
| 1-22 | 0 | 1 | 0 | 1 | Rh | Pd, Rh | 1 | Inv. ex. |
| 1-23 | 0 | 1 | 1 | 0 | Pd, Rh | Pd, Rh | 1 | Inv. ex. |
| 1-24 | 0 | 1 | 0 | 1 | Pd, Rh | Pd, Rh | 1 | Inv. ex. |
| 1-25 | 0 | 1 | 1 | 0 | Pd | Rh | 0.15 | Inv. ex. |
| 1-26 | 0 | 1 | 0 | 1 | Pd | Rh | 0.15 | Inv. ex. |
| 1-27 | 0 | 1 | 1 | 0 | Pd | Rh | 0.05 | Inv. ex. |
| 1-28 | 0 | 1 | 0 | 1 | Pd | Rh | 0.05 | Inv. ex. |
| 1-29 | 0 | 1 | 1 | 0 | Pd | Rh | 9 | Inv. ex. |
| 1-30 | 0 | 1 | 0 | 1 | Pd | Rh | 9 | Inv. ex. |
| 1-31 | 0 | 1 | | 0 | Pd | Rh | 12 | Inv. ex. |
| 1-32 | 0 | 1 | 0 | 1 | Pd | Rh | 12 | Inv. ex. |
| 1-33 | 0 | 1 | 1 | 0 | Pd | - | A only | Comp. ex. |
| 1-34 | - | - | - | - | - | Rh | B only | Comp. ex. |
| 1-35 | 0 | 1 | 1 | 0 | Rh | - | A only | Comp. ex. |
| 1-36 | - | - | - | - | - | Pd, Rh | B only | Comp. ex. |

As the honeycomb wash-coated with each said catalyst, a cylindrical stainless steel honeycomb with a predetermined shape diameter of 25 cm, height of 60 cm, and size of cell pores of the honeycomb cross-section of a length of 1 mm × a width of 2 mm was used. This honeycomb was held vertical, an excessive amount of said slurry was uniformly placed on its top end face, suction was applied from the honeycomb bottom end face to coat the inside walls of the honeycomb, and excessive slurry was removed. When slurry was stuck to the outer surface of the honeycomb, the stuck slurry was wiped off before drying. While continuing the suction, the honeycomb top end face was dried by blowing air. The honeycomb was then turned upside down and the procedure for coating and drying slurry at the inside walls of said honeycomb was performed again. After this, the honeycomb was heat treated in the atmosphere at 650°C for 1 hour, whereby a stainless steel honeycomb structure wash-coated with the above precious metal-loading oxide powder (A) and precious metal-loading activated alumina powder (B) of the present invention was obtained. Further, the total amount of precious metal immobilized at said honeycomb was 1.1 to 1.6 g/L.

The catalyst performances of the catalyst and honeycomb structure with the catalyst were evaluated using the following method.

First, the method of evaluation of the exhaust gas purification performance relating to the catalyst and honeycomb structure with the catalyst will be explained.

First, the method of evaluation of the catalyst alone (catalyst powder or catalyst particles) will be explained. The evaluation apparatus used here is a circulation type reaction apparatus made from stainless steel pipes. The model gas of the composition of Table 1 is introduced from the inlet side, this is circulated to the exhaust gas purification reaction unit, then this is exhausted to the outlet side. The model gas is heated by an external heater and sent to the exhaust gas purification reaction unit where the purification reaction part is heated. The catalyst (including) particles are set in a column of the evaluation apparatus, raised in temperature, and cyclically repeatedly subjected to the three conditions shown in Table 2 (rich → stoichiometric → lean). The gas composition at the outflow side (after passing through catalyst portion) was analyzed under a rich condition for breakdown of NO and under the stoichiometric condition for CO and hydrocarbons (hereinafter "HC") to find the rates of change of the concentrations of CO, HC, and NO and thereby evaluate the respective purification characteristics. The space velocity was made 50,000 hr⁻¹. The measurement was conducted at a point of time when the inlet gas composition can be deemed to have stabilized after switching the inlet gas composition. After this, a separate inlet gas composition was changed to and similar measurement was performed. In the evaluation apparatus of the present invention, the measurement was conducted 100 seconds after switching the inlet gas composition. After 180 seconds, the operation for switching to a separate inlet gas composition was repeated.

Next, the method of evaluation of the catalyst performance of the honeycomb structure with the catalyst will be explained. The honeycomb structure with the catalyst was held in an atmosphere of the stoichiometric conditions of Table 2 at 450 to 500°C for 1 hour, then was cooled once to near ordinary temperature. Next, this was set in the evaluation apparatus and examined for rates of change of the concentrations of CO, HC, and NO (purification characteristics) by the same routine and under the same conditions as above. The spatial velocity was made 50,000 hr⁻¹.

Table 3 shows the result of evaluation of the above catalyst performance. Example Nos. 1-1 to 1-32 had higher purification performances compared with Comparative Example Nos. 1-33 to 1-36 using catalyst (A) or catalyst (B) alone. In the invention examples, no oxygen storing material is included, but even in this state the purification performance is high.

**Table 2**

| Name of condition | Model gas composition before purification (vol%) | | | | | | |
|---|---|---|---|---|---|---|---|
| | N₂ | CO₂ | C₃H₆ | CO | H₂ | O₂ | NO |
| Rich | 82.925 | 13.8 | 0.040 | 2.04 | 0.68 | 0.49 | 0.025 |
| Stoichiometric | 84.985 | 13.8 | 0.040 | 0.49 | 0.17 | 0.49 | 0.025 |
| Lean | 83.975 | 13.8 | 0.040 | 0.49 | 0.17 | 1.50 | 0.025 |

**Table 3**

| No. | Total amount of precious metal immobilized in honeycomb (g/L) | Purification characteristics of catalyst (300°C) | | | Catalyst performance of honeycomb structure with catalyst (300°C) | | | Remarks |
|---|---|---|---|---|---|---|---|---|
| | | CO | HC | NO | CO | HC | NO | |
| 1-1 | 1.1 | ⊚ | ⊚ | ⊚ | ⊚ | ⊚ | ⊚ | Inv. ex. |
| 1-2 | 1.1 | ⊚ | ⊚ | ⊚ | ⊚ | ⊚ | ⊚ | Inv. ex. |
| 1-3 | 1.1 | ⊚ | ⊚ | ⊚ | ⊚ | ⊚ | ⊚ | Inv. ex. |
| 1-4 | 1.1 | ⊚ | ⊚ | ⊚ | ⊚ | ⊚ | ⊚ | Inv. ex. |
| 1-5 | 1.1 | ⊚ | ⊚ | ⊚ | ⊚ | ⊚ | ⊚ | Inv. ex. |
| 1-6 | 1.1 | ⊚ | ⊚ | ⊚ | ⊚ | ⊚ | ⊚ | Inv. ex. |
| 1-7 | 1.1 | ⊚ | ⊚ | ⊚ | ⊚ | ⊚ | ⊚ | Inv. ex. |
| 1-8 | 1.1 | ⊚ | ⊚ | ⊚ | ⊚ | ⊚ | ⊚ | Inv. ex. |
| 1-9 | 1.1 | ⊚ | ⊚ | ⊚ | ⊚ | ⊚ | ⊚ | Inv. ex. |
| 1-10 | 1.1 | ⊚ | ⊚ | ⊚ | ⊚ | ⊚ | ⊚ | Inv. ex. |
| 1-11 | 1.1 | ⊚ | ⊚ | ⊚ | ⊚ | ⊚ | ⊚ | Inv. ex. |
| 1-12 | 1.1 | ⊚ | ⊚ | ⊚ | ⊚ | ⊚ | ⊚ | Inv. ex. |
| 1-13 | 1.1 | ○ | ○ | ○ | ○ | ○ | ○ | Inv. ex. |
| 1-14 | 1.1 | ○ | ○ | ○ | ○ | ○ | ○ | Inv. ex. |
| 1-15 | 1.1 | ○ | ○ | ○ | ○ | ○ | ○ | Inv. ex. |
| 1-16 | 1.1 | ○ | ○ | ○ | ○ | ○ | ○ | Inv. ex. |
| 1-17 | 1.1 | ⊚ | ⊚ | ⊚ | ⊚ | ⊚ | ⊚ | Inv. ex. |
| 1-18 | 1.1 | ⊚ | ⊚ | ⊚ | ⊚ | ⊚ | ⊚ | Inv. ex. |
| 1-19 | 1.6 | ⊚ | ⊚ | ⊚ | ○ | ⊚ | ⊚ | Inv. ex. |
| 1-20 | 1.6 | ⊚ | ⊚ | ⊚ | ○ | ⊚ | ⊚ | Inv. ex. |
| 1-21 | 1.6 | ⊚ | ⊚ | ⊚ | ○ | ⊚ | ⊚ | Inv. ex. |
| 1-22 | 1.6 | ⊚ | ⊚ | ⊚ | ○ | ⊚ | ⊚ | Inv. ex. |
| 1-23 | 1.6 | ⊚ | ⊚ | ○ | ⊚ | ⊚ | ○ | Inv. ex. |
| 1-24 | 1.6 | ⊚ | ⊚ | ○ | ⊚ | ⊚ | ○ | Inv. ex. |
| 1-25 | 1.1 | ○ | ○ | ○ | ○ | ○ | ○ | Inv. ex. |
| 1-26 | 1.1 | ○ | ○ | ○ | ○ | ○ | ○ | Inv. ex. |
| 1-27 | 1.1 | ⊚ | ⊚ | ○ | ⊚ | ⊚ | ○ | Inv. ex. |
| 1-28 | 1.1 | ⊚ | ⊚ | ○ | ⊚ | ⊚ | ○ | Inv. ex. |
| 1-29 | 1.1 | ⊚ | ⊚ | ○ | ⊚ | ⊚ | ○ | Inv. ex. |
| 1-30 | 1.1 | ⊚ | ⊚ | ○ | ⊚ | ⊚ | ○ | Inv. ex. |
| 1-31 | 1.1 | ○ | ○ | ○ | ○ | ○ | ○ | Inv. ex. |
| 1-32 | 1.1 | ○ | ○ | ○ | ○ | ○ | ○ | Inv. ex. |
| 1-33 | 1.1 | ○ | ○ | × | ○ | ○ | × | Comp. ex. |
| 1-34 | 1.1 | △ | △ | ○ | △ | △ | ○ | Comp. ex. |
| 1-35 | 1.1 | △ | △ | × | △ | △ | × | Comp. ex. |
| 1-36 | 1.1 | △ | △ | △ | △ | △ | △ | Comp. ex. |

| | | | | | | | | |
|---|---|---|---|---|---|---|---|---|
| * Purification rate : ⊚ (very good) : 90 to 100%. ○ (good) : 70 to 90%, △ (fair) : 50 to 70%, × (poor) : 0 to 50% | | | | | | | | |

### Example 2

An SrCoO_{3-δ} complex oxide prepared by a method similar to Example 1 was made to load Pd by a method similar to Example 1 in an amount of 0.6 part by mass to prepare a Pd-loading SrCoO_{3-δ} complex oxide (A). On the other hand, the same procedure was followed as in Example 1 to make activated alumina load Rh in an amount of 0.5 part by mass to prepare an Rh-loading activated alumina (B). As shown in Table 4, the mixing ratio of (A) and (B) was changed to prepare the catalyst. The prepared catalysts were wash-coated as shown in FIG. 2(a) and FIG. 2(b) separately at the gas inlet side and outlet side by a method similar to Example 1 on a ceramic honeycomb and a stainless steel honeycomb to obtain honeycomb structures with the catalyst. Further, the slurry concentrations were doubled and, as shown in FIG. 3(a), FIG. 3(b), and FIG. 3(c), first the catalyst (A) was wash-coated so that the gas inlet side became thicker in the drying process, then the catalyst (B) was wash-coated so that similarly the gas outlet side became thicker and thereby a honeycomb structure with the catalyst with gradients of coated amounts was prepared. The method of evaluation of the catalyst performance of the honeycomb structure with the catalyst is similar to that in Example 1. Table 5 shows the results of the evaluation.

**Table 4**

| No. | Gas inlet side | | Gas outlet side | | R1/R2 |
|---|---|---|---|---|---|
| | A/B mass ratio (R1) | Coat length with respect to honeycomb length (%) | A/B mass ratio (R2) | Coat length with respect to honeycomb length (%) | |
| 2-1 | 5 | 50 | 0.5 | 50 | 10 |
| 2-2 | 1 | 50 | 0.2 | 50 | 5 |
| 2-3 | 10 | 10 | 0.1 | 90 | 100 |
| 2-4 | 1 | 80 | 0.1 | 20 | 10 |
| 2-5 | 1 | 80 | 0.1 | 20 | 10 |
| 2-6 | 1 | 90 | 0.5 | 10 | 2 |
| 2-7 | 1 | 50 | 1 | 50 | 1 |
| 2-8 | 0.5 | 50 | 1 | 50 | 0.5 |
| 2-9 | 2 | Coat reduced in gradient from gas inlet side | 1 | Coat reduced in gradient from gas outlet side | 2 |

**Table 5**

| No. | Total amount of precious metal immobilized in honeycomb (g/L) | Catalyst performance of honeycomb structure with catalyst (300°C) | | |
|---|---|---|---|---|
| | | CO | HC | NO |
| 2-1 | 1.1 | ⊚ | ⊚ | ⊚ |
| 2-2 | 1.1 | ⊚ | ⊚ | ⊚ |
| 2-3 | 1.1 | ⊚ | ⊚ | ⊚ |
| 2-4 | 1.1 | ⊚ | ⊚ | ⊚ |
| 2-5 | 1.1 | ⊚ | ⊚ | ⊚ |
| 2-6 | 1.1 | ⊚ | ⊚ | ⊚ |
| 2-7 | 1.1 | ⊚ | ⊚ | ○ |
| 2-8 | 1.1 | ○ | ○ | ○ |
| 2-9 | 1.1 | ⊚ | ⊚ | ⊚ |

| | | | | |
|---|---|---|---|---|
| * Purification rate: ⊚ (very good): 90 to 100%, ○ (good): 70 to 90%, Δ (fair): 50 to 70%. × (poor):0 to 50% | | | | |

As shown in Table 5, the catalyst structures wash-coated with the purification catalysts of the present invention with gradients of coated amounts (Nos. 2-1 to 2-9) all exhibit good catalyst performances.

### Example 3

As shown in Table 6, an M(Co_{1-y}Fe_{y})O_{3-δ} complex oxide prepared by a method similar to Example 1 was made to load Pd and Rh by a method similar to Example 1 in an amount of 0.6 part by mass to prepare a precious metal loading M(Co_{1-y}Fe_{y})O_{3-δ} complex oxide (A). On the other hand, the same procedure was followed as in Example 1 to make the activated alumina load Pd and Rh in an amount of 0.5 part by mass to prepare a precious metal loading activated alumina (B). The prepared catalysts were, as shown in FIG. 4(a) and FIG. 4(b), separately wash-coated at the gas inlet side and outlet side by a method similar to Example 1 on a ceramic honeycomb and a stainless steel honeycomb to obtain honeycomb structures with the catalyst. The honeycomb structures with the catalyst were evaluated for catalyst performance by a method similar to that of Example 1. Table 7 shows the results of evaluation.

**Table 6**

| No. | Precious metal loading oxide ponder (A) | | | | | Loaded precious metal of precious metal-loading activated alumina powder (B) |
|---|---|---|---|---|---|---|
| | M(Co_{1-y}Fe_{y})O_{3-δ} complex oxide composition (molar ratio) | | | | Loaded precious metal | |
| | Ba | Sr | Co | Fe | | |
| 3-1 | 0 | 1 | 1 | 0 | Pd | Rh |
| 3-2 | 0 | 1 | 0 | 1 | Pd | Rh |
| 3-3 | 0 | 1 | 1 | 0 | Pd, Rh | Pd, Rh |
| 3-4 | 0 | 1 | 0 | 1 | Pd, Rh | Pd, Rh |
| 3-5 | 0.5 | 0.5 | 0.8 | 0.2 | Pd | Rh |
| 3-6 | 0.5 | 0.5 | 0.2 | 0.8 | Pd | Rh |

**Table 7**

| No. | Coat length of precious metal-loading oxide powder (A) with respect to honeycomb length (%) | Coat length of precious metal-loading activated alumina powder (B) with respect to honeycomb length (%) | Total amount of precious metal immobilized at honeycomb (g/L) | Catalyst performance of honeycomb structure with catalyst (300C°C) | | |
|---|---|---|---|---|---|---|
| | | | | CO | HC | NO |
| 3-1 | 50 | 50 | 1.1 | ⊚ | ⊚ | ⊚ |
| 3-2 | 50 | 50 | 1.1 | ⊚ | ⊚ | ⊚ |
| 3-3 | 50 | 50 | 1.6 | ⊚ | ⊚ | ○ |
| 3-4 | 50 | 50 | 1.6 | ⊚ | ⊚ | ○ |
| 3-5 | 60 | 40 | 1.1 | ○ | ○ | ○ |
| 3-6 | 60 | 40 | 1.1 | ○ | ○ | ○ |

| | | | | | | |
|---|---|---|---|---|---|---|
| * Purification rate: ⊚ (very good): 90 to 100%, ○ (good): 70 to 90%, Δ (fair): 50 to 70%, × (poor): 0 to 50% | | | | | | |

As shown in Table 7, the honeycomb catalyst structures having purification catalysts of the present invention wash-coated at the gas inlet sides and gas outlet sides (Nos. 3-1 to 3-6) all exhibit good catalyst performances.

### INDUSTRIAL APPLICABILITY

In the above way, according to the present invention, by not using Pt, the amount of use of precious metals is reduced, a three-way catalyst not containing any expensive rare earth element is obtained, and the cost of an exhaust gas purification converter can be greatly reduced. Further, the M(Co_{1-y}Fe_{y})O_{3-δ} loading a precious metal not including Pt handles the oxidation of CO and the partial oxidation of HC, while the activated alumina loading a precious metal not including Pt promotes the reduction purification of NOₓ by the partially oxidized HC. The two types of catalysts act synergistically for exhaust gas purification, so a high catalyst performance can be achieved even if not using Pt and thereby reducing the amount of precious metal used.

## Claims

1. An exhaust gas purification catalyst containing an oxide M(Co_{1-y}Fe_{y})O_{3-δ} loading one or both of the precious metals of Pd and Rh (where M is a combination of elements substantially selected from Ba and Sr, y is 0 to 1, and δ is a value determined by satisfying a charge neutral condition) (A) and an activated alumina loading one or both of the precious metals of Pd and Rh (B).

2. An exhaust gas purification catalyst as set forth in claim 1, **characterized in that** the precious metal loaded on said oxide (A) is Pd and the precious metal loaded on said activated alumina (B) is Rh.

3. An exhaust gas purification catalyst as set forth in claim 1 or 2, **characterized in** the oxide M(Co_{1-y}Fe_{y})O_{3-δ}(A) and activated alumina (B) loading said precious metals are in a mass ratio of A/B of 0.1 to 10.

4. An exhaust gas purification catalyst as set forth in claim 1, **characterized in that** the value of said y is 0.2 to 1.

5. An exhaust gas purification honeycomb structure with a catalyst **characterized by** having an exhaust gas purification catalyst as set forth in any one of claims 1 to 4 wash-coated on a ceramic or metal honeycomb.

6. An exhaust gas purification honeycomb structure with a catalyst as set forth in claim 5 **characterized in that** an A/B mass ratio R1 of an exhaust gas purification catalyst of a gas inlet side of said honeycomb and an A/B mass ratio R2 of an exhaust gas purification catalyst of a gas outlet side are in a ratio of R1/R2 of over 1 to 100.

7. An exhaust gas purification honeycomb structure with a catalyst as set forth in claim 5 **characterized in that** a coated amount of said exhaust gas purification catalyst with said A/B mass ratio of R1 is reduced with a gradient from a gas inlet side to gas outlet side of the honeycomb, a coated amount of said exhaust gas purification catalyst with said A/B mass ratio of R2 is reduced from a gas outlet side to a gas inlet side of the honeycomb, and a ratio of R1/R2 is over 1 to 100.

8. An exhaust gas purification honeycomb structure with a catalyst comprising an oxide M(Co_{1-y}Fe_{y})O_{3-δ} (where M is a combination of elements substantially selected from Ba and Sr, y is 0 to 1, and δ is a value determined so as to satisfy a charge neutral condition) (A) loading one or both of the precious metals of Pd and Rh wash-coated at a gas inlet side of a ceramic or metal honeycomb and
an activated alumina (B) loading one or both of the precious metals of Rd and Rh wash-coated at a gas outlet side of said honeycomb.

9. An exhaust gas purification honeycomb structure with a catalyst as set forth in claim 8 **characterized in that** the precious metal loaded on said oxide (A) is Pd and the precious metal loaded on said activated alumina (B) is Rh.

10. An exhaust gas purification honeycomb catalyst structure with a catalyst as set forth in claim 8 **characterized in that** the value of said y is 0.2 to 1.
